# EUROPEAN PATENT APPLICATION

(11) **EP 2 981 000 A1**
(43) Date of publication of application: **03.02.2016**
(21) Application number: 13880262.4
(22) Date of filing: 16.08.2013
(51) Int. Cl.: H04B 7/185

(54) **PORTABLE SATELLITE COMMUNICATION APPARATUS**

(30) Priority: 25.03.2013 KR 20130031798; 15.05.2013 KR 20130055072
(71) Applicant: Asia Pacific Satellite-Communications Inc., Geumcheongu Seoul 153-768 (KR)
(72) Inventor: PARK, Jong In, Seoul 158-752 (KR)
(74) Representative: Zacco Sweden AB
(86) International application number: PCT/KR2013/007367
(87) International publication number: WO 2014/157785

(57) **Abstract**

Provided is a portable satellite communication apparatus including a satellite terminal short-range communication module configured to perform short-range wireless communication with a portable terminal, a satellite radio frequency (RF) module configured to perform signal processing to perform satellite communication through a satellite antenna, a voice data input/output unit configured to perform input and output voice data, and a satellite terminal control unit configured to, according to a called party number input through the satellite terminal short-range communication module from the portable terminal, form a traffic channel using satellite communication through the satellite RF module, transmit voice data being input through the voice data input/output unit to the satellite RF module, and output voice data being input from the satellite RF module through the voice data input/output unit.

## Description

### [Technical Field]

The present invention relates to a portable satellite communication apparatus, and more particularly, to a portable satellite communication apparatus that transmits and receives data through a satellite communication network in connection with a portable terminal.

### [Background Art]

In general, when a call set-up request is received from a mobile communication subscriber or a public switched telephone network (PSTN) subscriber, a mobile communication system provides a mobile communication service by allocating resources of the mobile communication system, for example, channels for a call set-up, to generate a call.

When an outgoing call, an incoming call, and a handoff call are generated from a mobile communication terminal as the described above, a base station transmits a request for processing the call to a mobile switching center through a base station controller. Then, the mobile switching center receives the request for processing the call, and performs a call process.

However, when there is a glut of requests for processing calls or a breakdown occurs in devices of a core network, a system failure may occur. When such a system failure may occur, the system stops providing services or has difficulty in providing services.

As such, when a failure occurs in a communication network, various types of services and processes are stopped and a restoration is performed. If the system is completely restored from the failure, the system is normally operated by restarting various types of devices of the core network.

However, in the case of restoring a conventional terrestrial network, the network may be overloaded or another system failure may occur, and in particular, it takes a great amount of time to restore the system.

Accordingly, users do not only have difficulty in using a communication service before the terrestrial network is restored from failure, but need to wait until the terrestrial network is restored by a service provider.

In addition, in the conventional technology, a portable terminal needs to be fixed in a repair shop when a failure occurs due to a breakdown or the like. In this case, it is difficult to cope with an emergency situation.

In addition, when a conventional portable terminal has a discharged battery, the terminal cannot communicate with another communication terminal. In this case, a separate charger is needed. Accordingly, the portable terminal has difficulty in charging on site in real time, and thus the mobile terminal cannot be used.

The background technique of the present invention is disclosed in Korean Unexamined Patent Application Publication No. 10-2001-0054506 (July 2, 2001).

### [Disclosure]

### [Technical Problem]

The present invention is directed to providing a portable satellite communication apparatus capable of performing data communication using satellite communication in the event of a terrestrial network failure or a breakdown in the communication of a portable terminal.

The present invention is directed to providing a portable satellite communication apparatus capable of replacing a key input device and a display device that are installed on the conventional portable satellite phone with a portable terminal, such as a smartphone, thereby reducing manufacturing costs of a portable satellite phone.

The present invention is directed to providing a portable satellite communication apparatus capable of making an emergency call with an external communication terminal through satellite communication even if normal communication is impossible due to portable terminal failure.

The present invention is directed to providing a portable satellite communication apparatus capable of charging a battery of a portable terminal by supplying power to the battery upon a discharged state of the battery.

### [Technical Solution]

One aspect of the present invention provides a portable satellite communication apparatus including a satellite terminal short-range communication module, a satellite terminal short-range communication module, a satellite radio frequency (RF) module, a voice data input/output unit and a satellite terminal control unit. The satellite terminal short-range communication module may be configured to perform short-range wireless communication with a portable terminal. The satellite radio frequency (RF) module may be configured to perform signal processing to perform satellite communication through a satellite antenna. The voice data input/output unit may be configured to input and output voice data. The satellite terminal control unit may be configured to, according to a called party number input through the satellite terminal short-range communication module from the portable terminal, form a traffic channel using satellite communication through the satellite RF module, transmit voice data being input through the voice data input/output unit to the satellite RF module, and output voice data being input from the satellite RF module through the voice data input/output unit.

When a call switch key is input, the satellite terminal control unit may input the voice data being input through the voice data input/output unit to the satellite RF module and may transmit the voice data being input from the satellite RF module to the portable terminal.

The satellite RF module may convert a satellite signal being received through the satellite antenna to be able to be transmitted to the portable terminal, and may convert data being input from the portable terminal through the satellite terminal short-range communication module into a satellite signal to be able to be transmitted through the satellite antenna.

When a request to transmit text data is made by the portable terminal through the satellite terminal short-range communication module, the satellite terminal control unit may transmit the text data through the satellite RF module.

The satellite terminal control unit may transmit text data being input through the satellite RF module to the portable terminal through the satellite terminal short-range communication module.

The portable satellite communication apparatus may further include an emergency call key to request the satellite terminal control unit to make an emergency call. When the emergency call key is input, the portable terminal control unit may perform a satellite call using a previously stored called party number.

The portable satellite communication apparatus may further include a power management unit configured to output power of a satellite terminal battery, and a charging unit configured to supply the power output through the power management unit to a portable terminal battery of the portable terminal such that the portable terminal battery is charged.

The power management unit may include a power control unit, a power supply key and a satellite terminal power connector. The power control unit may be configured to switch power being output from the satellite terminal battery. The power supply key may be configured to switch the power control unit. The satellite terminal power connector may be connected to the charging unit and configured to supply the power of the satellite terminal battery to the charging unit.

The portable satellite communication apparatus may further include a charge indicating unit that indicates an amount of charge in the satellite terminal battery.

### [Advantageous Effects]

As is apparent from the above, according to the present invention, since satellite communication is used, a voice call can be used and text can be transmitted and received even if a failure occurs in a terrestrial network.

According to the present invention, since a key input device and a display device installed on the existing portable satellite phone can be replaced by a portable terminal such as a smartphone, manufacturing costs of a portable satellite phone can be reduced.

According to the present invention, even if normal communication is impossible due to portable terminal failure, an emergency call can be made with an external communication terminal through satellite communication.

According to the present invention, a battery of a portable terminal can be charged by supplying power to the battery upon a discharged state of the battery.

### [Description of Drawings]

FIG. 1 is a flowchart illustrating a service flow of a portable satellite communication apparatus according to an exemplary embodiment of the present invention.
FIG. 2 is a block diagram illustrating a configuration of a portable terminal according to an exemplary embodiment of the present invention.
FIG. 3 is a block diagram illustrating a configuration of a satellite terminal according to an exemplary embodiment of the present invention.
FIG. 4 is a perspective view illustrating a configuration of an exterior of a satellite terminal according to an exemplary embodiment of the present invention.

### [Modes of the Invention]

Hereinafter, exemplary embodiments of the present invention will be described in detail. In describing the present invention, the thickness and size of each component shown in the drawings can be simplified or exaggerated for the purpose of convenience or clarity. The terminology used herein is defined in consideration of its function in the present invention, and may vary with an intention of a user and an operator or custom. Accordingly, the definition of the terms should be determined based on the overall content of the specification.

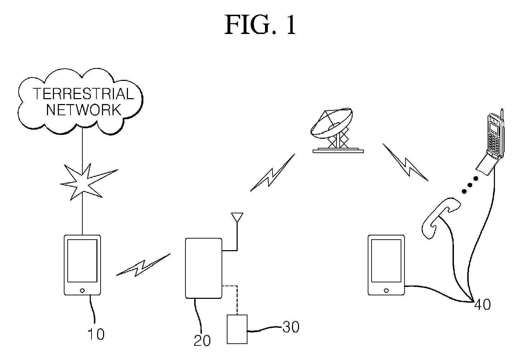

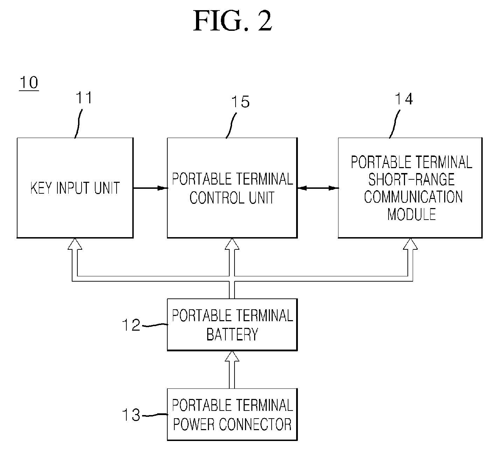

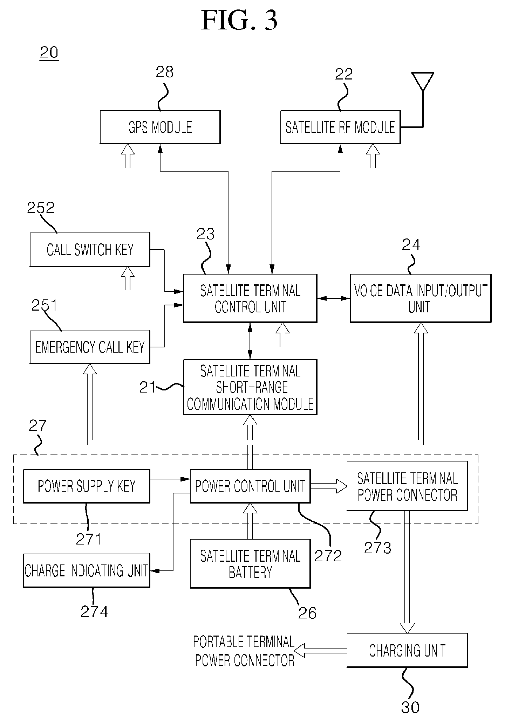

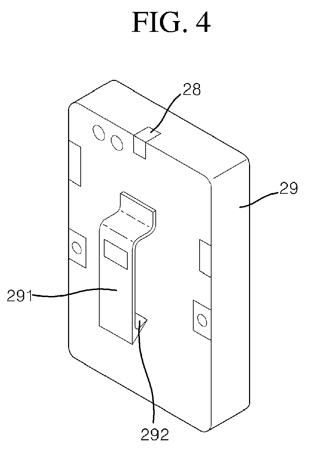

FIG. 1 is a flowchart illustrating a service flow of a portable satellite communication apparatus according to an exemplary embodiment of the present invention, FIG. 2 is a block diagram illustrating a configuration of a portable terminal according to an exemplary embodiment of the present invention, FIG. 3 is a block diagram illustrating a configuration of a satellite terminal according to an exemplary embodiment of the present invention, and FIG. 4 is a perspective view illustrating a configuration of an exterior of a satellite terminal according to an exemplary embodiment of the present invention.

A portable terminal 10 performs wireless communication with other communication terminals 40 using a terrestrial network.

In addition, the portable terminal 10 is connected to a satellite terminal 20 that performs wireless communication via a satellite communication network in a short range wireless communication scheme to transmit and receive various types of data and commands.

Accordingly, the portable terminal 10 may perform wireless communication with the other communication terminals 40 over the satellite communication network through the satellite terminal 20 if necessary.

For example, when the portable terminal 10 has difficulty in normal communication via a terrestrial network due to a failure in the terrestrial network or an operational error, the portable terminal 10 may perform wireless communication with the other communication terminals 40 via a satellite communication network through the satellite terminal 20.

To this end, the portable terminal 10 includes a portable terminal short-range communication module 14 capable of performing short-range wireless communication with the satellite terminal 20.

The short-range wireless communication is described as wireless data communication performed using Bluetooth communication. However, the short-range communication method may be implemented by ZigBee, a IEEE 802.15.4 specification supporting short-range communication, used for ubiquitous computing and short-range communication within a range of 10-20m in a wireless networking area such as a home or office; Wi-Fi, a short-range communication network for high-speed Internet within a predetermined range from a location where an access point (AP) is installed; or near field communication (NFC) for data transmission between terminals within a short range of 10cm through a contactless short-range wireless communication module using a frequency band of 13.56MHz.

For reference, the terrestrial network is a communication network based on a communication scheme, such as code division multiple access (CDMA), time division multiple access (TDMA), Wideband Code Division Multiple Access (WCDMA) and Long Term Evolution (LTE), and employs synchronous communication or asynchronous communication.

In addition, when the portable terminal 10 is inoperative due to a discharged portable terminal battery 12, the portable terminal 10 charges the portable terminal battery 12 using power received from a satellite terminal battery 26 provided in the satellite terminal 20, thereby preventing the portable terminal battery 12 from being inoperative due to the discharged state of the portable terminal battery 12.

The satellite terminal 20 performs a call process for satellite communication, converts various types of data transmitted from the portable terminal 10 in a short range wireless communication scheme into a satellite signal, outputs the signal through a satellite antenna, converts a satellite signal received from the satellite antenna into a signal that is able to be transmitted in a short range wireless communication method, and transmits the converted satellite signal to the portable terminal 10.

That is, the portable terminal 10 transmits a phone number of another communication terminal 40 to the satellite terminal 20, and the satellite terminal 20 performs a call process according to the phone number of the other communication terminal 40. Then, the satellite terminal 20 receives a voice of a user and transmits the received voice to the other communication terminal 40, and outputs a voice received from the another communication terminal 40, thereby enabling a user to perform a voice call through the satellite terminal 20.

Thus, when communication through a terrestrial network is impossible due to a terrestrial network failure, the satellite communication apparatus having a short-range wireless interface according to an exemplary embodiment of the present invention is switched into a satellite communication mode that uses the satellite terminal 20 to enable a connection with the other communication terminals 40.

In addition, when failure occurs in the portable terminal 10 or normal operation is impossible due to the discharged state of the portable terminal battery 12, the satellite terminal 20 enables an emergency call to be performed using satellite communication, or supplies power of the satellite terminal battery 26 provided in the satellite terminal 20 to the portable terminal battery 12.

A charging unit 30 is connected to the satellite terminal 20 to charge the portable terminal 10 by supplying power of the satellite terminal battery 26 to the portable terminal battery 12.

The portable terminal 10 according to an exemplary embodiment of the present invention may be provided by employing a smartphone as shown in FIG. 2. An application is embedded in the portable terminal 10, and according execution of the application, various types of data communication with the satellite terminal 20 are performed.

The portable terminal 10 includes a key input unit 11, the portable terminal battery 12, a portable terminal power connector 13, the portable terminal short-range communication module 14 and a portable terminal control unit 15.

The key input unit 11 is configured to input various types of key signals according to a key manipulation of a user. Therefore, the application is executed through the key input unit 11, and then various key signals, such as a call receiving/sending request, a called party number, a text, a menu setting, are input.

In addition, the key input unit 11 may set a phone number of a receiver's communication terminal 40 to make an emergency call to the satellite terminal 20 upon an occurrence of an emergency situation.

The portable terminal short-range communication module 14 performs short-range wireless communication with the satellite terminal 20.

When a key signal input through the key input unit 11 is input from the portable terminal control unit 15, the portable terminal short-range communication module 14 transmits the input key signal to the satellite terminal 20, and inputs data transmitted from the satellite terminal 20 to the portable terminal control unit 15.

When the application is executed and a called party number of another communication terminal 40 is input through the key input unit 11, the portable terminal control unit 15 transmits the called party number to the satellite terminal 20 through the portable terminal short-range communication module 14 to the satellite terminal 20. In this case, the satellite terminal 20 performs a call process by using the called party number of the other communication terminal 40 to transmit and receive various types of data with respect to the another communication terminal 40, thereby enabling a user to perform satellite communication through the satellite terminal 20.

Meanwhile, the portable terminal control unit 15 executes various types of menus of the application according to a control command input through the key input unit 11. The menus include a menu for setting an emergency called party number in the satellite terminal 20, a menu for displaying the amount of charge in the satellite terminal 20 and a menu for displaying the position of the satellite terminal 20.

Accordingly, the portable terminal control unit 15 performs operations corresponding to the menus according to the input control command in conjunction with the satellite terminal 20.

The portable terminal power connector 13 is electrically connected to the charging unit 30 to charge the portable terminal battery 12 by power received from the satellite terminal 20.

Referring to FIG. 3, an auxiliary apparatus of a portable terminal provided with a satellite communication function according to an exemplary embodiment of the present invention includes the satellite terminal 20 and the charging unit 30.

The satellite terminal 20 includes a satellite terminal short-range communication module 21, a satellite RF module 22, a satellite terminal control unit 23, a voice data input/output unit 24, an emergency call key 251, a call switch key 252, a satellite terminal battery 26, a power management unit 27, a charge indicating unit 274, and a Global Positioning System (GPS) module 28.

The satellite terminal short-range communication module 21 inputs various key signals transmitted from the portable terminal 10 to the satellite terminal control unit 23 by performing short-range wireless communication with the portable terminal 10. In addition, the satellite terminal communication module 21 transmits data being input from the satellite terminal control unit 23, for example, text data, to the portable terminal 10.

The satellite RF module 22 may perform signal processing to perform wireless communication through a satellite antenna, in which upon receiving a satellite signal from a satellite through the satellite antenna, the satellite RF module 22 converts the satellite signal into an intermediate frequency signal, converts the intermediate frequency signal into an I/Q (In phase/Quadrature phase) signal of a baseband digital signal, inputs the I/Q signal to the portable terminal control unit 15, and alternately, the satellite RF module 22 may convert a I/Q signal of a baseband digital signal into an intermediate frequency signal and then into a satellite signal that is then transmitted through the satellite antenna.

As such, the satellite RF module 22 maintains a communication channel frequency through the above process, and to this end, performs matched filtering, the generation of an I/Q signal, the maintenance of a system reference timing and a communication channel frequency, and control of the power of an RF transmitter.

Meanwhile, since processes of generating a satellite signal through the satellite RF module 22, outputting the generated satellite signal through a satellite antenna, and processing a satellite signal received from the satellite antenna are well-known, detailed description thereof will be omitted.

The satellite antenna transmits a satellite signal generated by the satellite RF module 22 to a satellite, and receives a satellite signal transmitted from the satellite and transmits the received satellite signal to the satellite RF module 22. The satellite antenna may be installed as an internal satellite antenna or an external satellite antenna.

The voice data input/output unit 24 converts voice data received from a user into an electrical signal, inputs the electrical signal to the satellite terminal control unit 23, processes voice data input from the satellite terminal control unit 23 and outputs the processed voice data, thereby enabling a user to use a voice call.

The emergency call key 251 inputs a key signal to request a satellite call using an emergency called party number to the satellite terminal control unit 23.

The emergency call key 251 may be provided in a plurality thereof. One of a plurality of emergency numbers may be selected depending on an input time or an input order of each emergency call key 251.

The call switch key 252 allows a voice to be input and output through the portable terminal 10 rather than the satellite terminal 20 upon abnormal operation of the voice data input/output unit 24 of the satellite terminal 20 in a process of inputting/outputting a voice through the satellite terminal 20. In this case, the portable terminal 10 transmits voice data of a user to the satellite terminal 20, and the satellite terminal 20 transmits the voice data received from the portable terminal 10 to other communication terminals 40. In addition, the satellite terminal 20 may transmit voice data received from the other communication terminals 40 to the portable terminal 10, and the portable terminal 10 outputs voice data received from the satellite terminal 20. That is, the satellite terminal 20 may relay voice data such that a user performs a satellite call by using the portable terminal 10.

The satellite terminal battery 26 not only supplies power to the satellite terminal, but supplies power to the charging unit 30 by the power management unit 27 such that the portable terminal battery 12 is charged.

The power management unit 27 includes a power supply key 271, a power control unit 272 and a satellite terminal power connector 273.

The power control unit 272 is connected to the satellite terminal battery 26 to switch power supplied from the satellite terminal battery 26 such that the power is supplied to the charging unit 30 through the satellite terminal power connector 273.

The power supply key 271 switches the power control unit 272 such that power supplied from the satellite terminal battery 26 is supplied to the satellite terminal power connector 273.

The satellite terminal power connector 273 is mechanically connected to the charging unit 30 such that power of the satellite terminal battery 26 is supplied to the portable terminal power connector 13 through the charging unit 30, so that the portable terminal battery 12 is charged.

When a user manipulates the power supply key 271 in the power management unit 27, the power control unit 272 switches power supplied from the satellite terminal battery 26 so that the power is supplied to the satellite terminal power connector 273.

Accordingly, power is supplied to the charging unit 30 by the satellite terminal power connector 273, and the charging unit 30 supplies the power supplied from the satellite terminal power connector 273 to the portable terminal battery 12.

The charge indicating unit 274 indicates the amount of charge in the satellite terminal battery 26.

The GPS module 28 detects the position of the satellite terminal 20. The GPS module 28 detects information about distances from at least three satellites thereto and information about a time at which the distance information is measured, and detects three-dimensional position information according to a latitude, a longitude and an altitude by applying trigonometry to the detected distance information.

The satellite terminal control unit 23 may perform various functions, such as a voice call and text message transmission/reception, according to a key signal input through the satellite terminal short-range communication module 21.

In addition, the satellite terminal control unit 23 processes data being input through the satellite terminal short-range communication module 21 and voice data being input through the voice data input/output unit 24, and inputs the processed data to the satellite RF module 22, and transmits data input from the satellite RF module 22 to the satellite terminal short-range communication module 21 and the voice data input/output unit 24.

That is, the satellite terminal control unit 23, upon receiving a called party number, a call key signal or text data through the satellite terminal short-range communication module 21, inputs the received called party number, call key signal or text data to the satellite RF module 22 to be subject to signal processing in the RF module 22 and then to be transmitted to the satellite through the satellite antenna. Accordingly, a communication channel for a voice call is formed or a text message is transmitted.

In addition, the satellite terminal control unit 23, upon receiving input of the call switch key 252 during a voice call, transmits voice data from the portable terminal 10 through the satellite terminal short-range communication module 21 and transmits the received voice data through the satellite RF module 22, and transmits voice data received from the satellite RF module 22 to the portable terminal 10 through the satellite terminal short-range communication module 21.

As such, the portable terminal 10 inputs and outputs voice data, thereby enabling a user to perform a voice call through satellite communication.

Meanwhile, the satellite terminal control unit 23, upon receiving voice data of a user through the voice data input/output unit 24, inputs the voice data to the satellite RF module 22 to be subject to signal processing in the RF module 22 and then to be transmitted to the satellite through the satellite antenna. In addition, the satellite terminal control unit 23 allows voice data of a called party input from the satellite RF module 22 to be input to the voice data input/output unit 24 such that a voice call is available for use.

In addition, the satellite terminal control unit 23, upon receiving text data of a called party from the satellite RF mode 22, inputs the text data to the portable terminal 10 such that the text data is output through the portable terminal 10, thereby enabling a user to recognize the output text data through the portable terminal 10.

Accordingly, even if a failure occurs in the terrestrial network, a user may perform a voice call and data transmission/reception through the satellite terminal 20. That is, a called party number, a request for call and text data that are input to the portable terminal 10 are transmitted to the communication terminal 40 of the called party, and various types of voice data and text data of the called party are output, so that a voice call or a text data transmission/reception is performed through satellite communication.

In addition, the satellite terminal control unit 23, upon receiving an input to the emergency call key 251, controls a call process for a satellite call based on a previously stored called party number for an emergency according to an input manner of the emergency call key 251 so that various types of voice data is transmitted and received through the satellite RF module 22, thereby enabling a satellite call.

Meanwhile, when the power supply key 271 is manipulated in a state of the charging unit 30 being connected to the satellite terminal power connector 273 and the portable terminal power connector, the satellite terminal control unit 23 switches power of the satellite terminal battery 26 through the power control unit 272, so that power of the satellite terminal battery 26 is supplied to the portable terminal battery 12, thereby charging the portable terminal battery 12.

Accordingly, even if the portable terminal battery 12 provided in the portable terminal 10 is in a discharged state and the portable terminal 10 is inoperative, the portable terminal battery 12 is immediately charged.

In addition, upon receiving a control command requesting to display the charge of the satellite terminal 20 from the portable terminal 10, the satellite terminal control unit 23 receives information about the satellite terminal battery 26 from the power control unit 272, and transmits the received information to the portable terminal 10 through the satellite terminal short-range communication module 21.

Meanwhile, the power control unit 272 checks a charge of the satellite terminal battery 26 and displays the checked charge of the satellite terminal battery 26 through the charge indicating unit 274.

In addition, upon being requested by the portable terminal 10 to provide position information about the satellite terminal 20, the satellite terminal control unit 23 extracts position information about the satellite terminal 20 through the GPS module 28 and transmits the extracted position information about the satellite terminal 20 to the portable terminal 10. Accordingly, the portable terminal 10 indicates position information about the satellite terminal 20 received from the satellite terminal 20 on an electronic map, thereby enabling a user to easily recognize the position of the satellite terminal 20.

The satellite terminal 20 is provided separately from the portable terminal 10, and if necessary, the satellite terminal 20 may be carried in a bag of a user, or attached to a bag or clothes of a user.

To this end, referring to FIG. 4, a case 29 of the satellite terminal 20 is provided with a coupling part 291.

The coupling part 291 is installed at one side of the case 29, and has one side thereof coupled to the case 29 so that a strap of a bag is inserted thereinto. The coupling part 291 is provided at an end thereof with a bending part 292 inwardly bent to prevent the coupling part 291 from being separated from the strap of the bag by catching the strap of the bag.

The coupling part 291 is not limited to the above embodiment, and may be provided in various ways depending on the installation location or storage scheme of the satellite terminal 20.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A portable satellite communication apparatus comprising:
a satellite terminal short-range communication module configured to perform short-range wireless communication with a portable terminal;
a satellite radio frequency (RF) module configured to perform signal processing to perform satellite communication through a satellite antenna;
a voice data input/output unit configured to input and output voice data; and
a satellite terminal control unit configured to, based on a called party number input through the satellite terminal short-range communication module from the portable terminal, form a traffic channel using satellite communication through the satellite RF module, transmit voice data being input through the voice data input/output unit to the satellite RF module, and output voice data being input from the satellite RF module through the voice data input/output unit.

2. The portable satellite communication apparatus of claim 1, wherein, when a call switch key is input, the satellite terminal control unit inputs the voice data being input through the voice data input/output unit to the satellite RF module and transmits the voice data being input from the satellite RF module to the portable terminal.

3. The portable satellite communication apparatus of claim 1, wherein the satellite RF module converts a satellite signal being received through the satellite antenna to be able to be transmitted to the portable terminal, and converts data being input from the portable terminal through the satellite terminal short-range communication module into a satellite signal to be able to be transmitted through the satellite antenna.

4. The portable satellite communication apparatus of claim 1, wherein, when a request to transmit text data is made by the portable terminal through the satellite terminal short-range communication module, the satellite terminal control unit transmits the text data through the satellite RF module.

5. The portable satellite communication apparatus of claim 1, wherein the satellite terminal control unit transmits text data being input through the satellite RF module to the portable terminal through the satellite terminal short-range communication module.

6. The portable satellite communication apparatus of claim 1, further comprising an emergency call key to request the satellite terminal control unit to make an emergency call,
wherein, when the emergency call key is input, the portable terminal control unit performs a satellite call using a previously stored called party number.

7. The portable satellite communication apparatus of claim 1, further comprising:
a power management unit configured to output power of a satellite terminal battery; and
a charging unit configured to supply the power output through the power management unit to a portable terminal battery of the portable terminal such that the portable terminal battery is charged.

8. The portable satellite communication apparatus of claim 7, wherein the power management unit comprises:
a power control unit configured to switch power being output from the satellite terminal battery;
a power supply key configured to switch the power control unit; and
a satellite terminal power connector connected to the charging unit and configured to supply the power of the satellite terminal battery to the charging unit.

9. The portable satellite communication apparatus of claim 8, further comprising a charge indicating unit that indicates an amount of charge in the satellite terminal battery.
